# EUROPÄISCHE PATENTSCHRIFT

(11) **EP 4 294 662 B1**
(45) Veröffentlichungstag und Bekanntmachung des Hinweises auf die Patenterteilung: **30.07.2025**
(21) Anmeldenummer: 22707653.6
(22) Anmeldetag: 07.02.2022
(51) Int. Cl.: B60L 53/16, B60L 53/18, B60L 53/66, H01R 13/66, H01R 31/06, B60L 53/65

(54) **LADEDOSE MIT FAHRZEUGINTERNEM DATENBUSANSCHLUSS**
CHARGING SOCKET WITH VEHICLE-INTERNAL DATA BUS CONNECTION
PRISE DE CHARGE AVEN CONNEXION INTERNE DANS UN VÉHICULE À UN BUS DE DONNÉES

(30) Priorität: 18.02.2021 BE 202105113
(43) Veröffentlichungstag der Anmeldung: 27.12.2023
(73) Patentinhaber: Phoenix Contact e-Mobility GmbH, 32816 Schieder-Schwalenberg (DE)
(72) Erfinder: ROSE, Markus, 33189 Schlangen (DE)
(74) Vertreter: Meyer-Graefe, Karsten
(86) Internationale Anmeldenummer: PCT/EP2022/052886
(87) Internationale Veröffentlichungsnummer: WO 2022/175128

(56) Entgegenhaltungen:
- EP-A1- 3 116 092
- EP-A1- 3 133 743
- WO-A1-2014/155947
- WO-A2-2014/108726
- DE-A1- 102010 045 131
- DE-A1- 102015 208 786
- US-A- 5 508 689

## Beschreibung

Die Erfindung betrifft eine Ladedose zum Laden eines Elektrofahrzeugs mit fahrzeuginternem Datenbusanschluss, einen Satz solcher Ladedosen zum Laden gemäß verschiedener Ladetechniken mit einheitlichem fahrzeuginternen Datenbusanschluss, und eine im Elektrofahrzeug mittels des Datenbusses mit der Ladedose in Kommunikation stehende Fahrzeugsteuerung.

Im Stand der Technik sind Ladedosen bekannt, die über einen Kabelbaum mit einer Vielzahl von Leitungen mit der Fahrzeugsteuerung verbunden sind. Die Vielzahl der Leitungen dient jeweils der Erfassung und Ansteuerung verschiedener Kontakte der Ladedose sowie Sensoren, Signalgebern und Aktoren an der Ladedose.

EP 3 116 092 A1 offenbart in einem Elektrofahrzeug eingebaute Ladedose zur Aufnahme eines Ladesteckers zum Laden eines Traktionsenergiespeichers des Elektrofahrzeugs mit einem elektrischen Ladestrom, umfassend Leistungskontakte, und Ladetechnik-spezifische Signalkontakte; sowie Fahrzeugsteuerung.

WO 2014/108726 A2 offenbart ebenfalls Ladedose in einem Elektrofahrzeug zur Aufnahme eines Ladesteckers, umfassend Leistungskontakte, und Ladetechnik-spezifische Signalkontakte und Signalumsetzer; sowie Fahrzeugsteuerung. US 5 508 689 A offenbart Schnittstellenmodul in einem separaten Gehäuse oder in dem Gehäuse der Fahrzeugsteuerung, umfassend Signalumsetzer und Busknoten.

Das Dokument EP 2 233 344 B1 beschreibt eine solche als Ladevorrichtung bezeichnete Ladedose. Im Fahrzeug ist eine Aktivierungssteuerungseinheit verbaut, die über die Ladedose ein Pilotsignal erfasst und abhängig vom erfassten Pilotsignal eine Ladesteuerungseinheit steuert.

Jedoch sind Steuersignale, wie das vorstehend genannte Pilotsignal, an den Signalkontakten der Ladedose spezifisch für die Ladetechnik zum Laden eines Traktionsenergiespeichers des Elektrofahrzeugs. Ein ladetechnik-spezifisches Steckgesicht der Ladedose, insbesondere mit Ladetechnik-spezifischen Signalkontakten stellt sicher, dass nur ein Ladestecker einer für die Ladetechnik ausgelegten Ladestation in die Ladedose aufnehmbar ist.

Elektrofahrzeuge in verschiedenen Weltregionen müssen für die jeweilige Ladetechnik passende Ladedosen aufweisen. Dies führt herkömmlicherweise dazu, dass in der Fahrzeugsteuerung für jede landesvariante entsprechende Schnittstellen zum Erzeugen und Erfassen der Steuersignal gemäß verschiedener Ladetechniken vorhanden sind, aber nur eine dieser Schnittstellen überhaupt genutzt wird und mit der Ladetechnik-spezifischen Ladedose verbunden ist.

Der Erfindung liegt daher die Aufgabe zu Grunde, eine Technik anzugeben, welche das Verbauen ungenutzter Funktionen und die damit verbundenen Ressourcen vermeidet.

Die Aufgabe wird mit den Merkmalen jedes der unabhängigen Ansprüche gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Ein erster Aspekt betrifft eine Ladedose, die in einem Elektrofahrzeug eingebaut oder einbaubar ist zur Aufnahme eines Ladesteckers zum Laden eines Traktionsenergiespeichers des Elektrofahrzeugs mit einem elektrischen Ladestrom. Die Ladedose umfasst Leistungskontakte, die dazu ausgebildet sind, korrespondierende Leistungskontakte des Ladesteckers im in der Ladedose aufgenommenen Zustand zu kontaktieren zum elektrischen Leiten des Ladestroms. Die Ladedose umfasst ferner Ladetechnik-spezifische Signalkontakte, die dazu ausgebildet sind, korrespondierende Signalkontakte des Ladesteckers im in der Ladedose aufgenommenen Zustand zu kontaktieren zum Steuern des Ladestroms. Die Ladedose umfasst ferner einen Signalumsetzer, der dazu ausgebildet ist, an den Ladetechnik-spezifischen Signalkontakten der Ladedose Steuersignale zum Steuern des Ladestroms zu senden und/oder zu empfangen. Die Ladedose umfasst ferner einen Busknoten, der einen Anschluss zu einem Datenbus umfasst und dazu ausgebildet ist, über den Datenbus mit einer Fahrzeugsteuerung des Elektrofahrzeugs zu kommunizieren. Der Busknoten ist ferner dazu ausgebildet, den Signalumsetzer zu steuern zum Senden der Steuersignale, wobei die gesendeten Steuersignale der Kommunikation über den Datenbus entsprechen, und/oder zum Empfangen der Steuersignale, wobei die Kommunikation über den Datenbus den empfangenen Steuersignale entspricht.

Aufgrund des Datenbusses, der nicht notwendigerweise Ladetechnik-spezifisch sein muss, kann ein Ausführungsbeispiel einer Ladetechnik-spezifische Ladedose mit einem Ausführungsbeispiele einer Ladetechnik-unspezifischen Fahrzeugsteuerung in einem Elektrofahrzeug kombinierbar sein. Optional können eine oder mehrere Funktionen der Ladedose vom Busknoten der Ladedose angesteuert und/oder ausgelesen werden in Kommunikation mit der Fahrzeugsteuerung.

Die Ladedose am Elektrofahrzeug kann auch als Fahrzeug-Inlet (oder kurz Inlet) bezeichnet werden.

Der Busknoten zum Datenbus kann einen Modulator zum Senden von Daten auf dem Datenbus und/oder einen Demodulator zum Empfangen von Daten vom Datenbus (zusammenhängend auch als Modem bezeichnet) umfassen.

Der Busknoten und der Signalumsetzer können Teil einer Steuereinheit der Ladedose sein. Beispielsweise kann der Signalumsetzer in den Busknoten integriert sein. Der Busknoten kann zur Kommunikation mit der Steuerung des Elektrofahrzeugs ausgebildet sein.

Das Elektrofahrzeug kann ein batterie-elektrisches Fahrzeuge (BEV) sein. Die Ladetechnik kann gemäß einem (beispielsweise internationalen, regionalen oder nationalen) Ladestandard für Elektrofahrzeuge ausgebildet sein.

Die gesendeten und/oder empfangenen Steuersignale können Daten in einer oder mehreren Protokoll-Dateneinheiten (fachsprachlich: Protocol Data Units, PDUs) der Kommunikation über den Datenbus entsprechen. Beispielsweise sind die Steuersignale in einer Nutzdateneinheit (fachsprachlich: Service Data Unit, SDU) der PDU enthalten.

Der Busknoten kann die Daten der Kommunikation über den Datenbus mittels des Signalumsetzers unverarbeitet in die gesendeten Steuersignale umsetzen oder eindeutig auf die gesendeten Steuersignale abbilden. Alternativ oder ergänzend kann der Busknoten die mittels des Signalumsetzers empfangenen Steuersignale unverarbeitet in die Daten der Kommunikation über den Datenbus umsetzen oder eindeutig auf die Daten der Kommunikation abbilden.

Der Busknoten kann den Datenrahmen der Kommunikation über den Datenbus von der Fahrzeugsteuerung empfangen. In Reaktion auf den empfangenen Datenrahmen kann der Busknoten den Signalumsetzer zum Senden der Steuersignale steuern. Alternativ oder ergänzend kann der Signalumsetzer die Steuersignale an den Signalkontakten empfangen. Der Busknoten kann in Reaktion auf das Empfangen der Steuersignale den Datenrahmen der Kommunikation über den Datenbus an die Fahrzeugsteuerung senden.

Der Datenrahmen kann fachsprachlich auch als "data frame" bezeichnet werden. Der Datenrahmen kann eine Protokoll-Dateneinheit (fachsprachlich: "Protocol Data Unit", PDU) auf der Sicherungsschicht (Schicht 2) der Kommunikation auf dem Datenbus sein. Der Datenrahmen kann ein Ethernet-Datenrahmen sein.

Eine Anordnung der Leistungskontakte und/oder der Signalkontakte (d.h. ein Steckgesicht) des Ladesteckers kann der Ladetechnik (beispielsweise eindeutig) entsprechen.

Der Ladestecker kann im in der Ladedose aufgenommenen Zustand mit der Ladedose elektrisch und mechanisch verbunden sein. Die Leistungskontakte und die Signalkontakte können zur elektrischen Verbindung ausgebildet sein. Eine Verriegelungsmechanik kann zur Verriegelung des Ladestecker gegen Entnahme im aufgenommenen Zustand ausgebildet sein. Die Verriegelungsmechanik kann einen Aktor (auch: Aktor oder Aktuatorik) umfassen, der dazu ausgebildet ist, den Ladestecker mittels der Verriegelungsmechanik wahlweise zu verriegeln und zu entriegeln (d.h. zur Entnahme freizugeben).

Der Ladestecker kann Teil einer Ladestation sein. Die Ladestation kann einen (beispielsweise freistehende) Ladesäule oder eine Wandanordnung (sogenannte Wall-Box) sein. Alternativ oder ergänzend kann der Ladestecker über ein Ladekabel mit der Ladestation verbunden sein. Das Ladekabel kann mit der Ladestation (optional über einen Adapter) steckbar verbindbar oder lösbar verbunden sein, oder das Ladekabel kann werkzeugfrei (d.h. werkzeuglos) und zerstörungsfrei unlösbar mit der Ladestation verbunden sein.

Hierin kann das Laden des Traktionsenergiespeicher (bzw. der Ladestrom zum Laden) ein Aufladen des Traktionsenergiespeichers und/oder ein Entladen des Traktionsenergiespeichers umfassen. Beispielsweise kann der Traktionsenergiespeicher entladen werden zum Angleichen elektrochemischer Eigenschaften (beispielsweise aufgrund eines Alterungszustands) von elektrochemischen Speicherzellen zum Speichern elektrischer Energie im Traktionsenergiespeicher. Alternativ oder ergänzend kann der Traktionsenergiespeicher des (beispielsweise geparkten) Elektrofahrzeugs (beim Aufladen und/oder Entladen) ein Pufferspeicher eines lokalen Energieversorgungssystems (beispielsweise einer Hausphotovoltaikanlage) sein.

Ein Kommunikationsprotokoll der Kommunikation auf dem Datenbus kann Ladetechnik-unabhängig sein. Alternativ oder ergänzend kann ein Signalprotokoll der gesendeten und/oder empfangenen Steuersignale an den Signalkontakten Ladetechnik-spezifisch sein. Das Signalprotokoll der Steuersignale an den Signalkontakten kann einem Ladeverfahren entsprechen.

Die Ladetechnik der Ladedose bzw. des Ladesteckers (beispielsweise das Steckgesicht) kann das Signalprotokoll implizieren. Beispielsweise kann eine Anordnung der Leistungskontakte und/oder Signalkontakte gemäß der Ladetechnik Combined Charging System (CCS) ein Signalprotokoll gemäß dem Ladeverfahren in Teil 3 der Norm IEC 62196 (d.h. EN 62196) implizieren.

Verschiedene Anordnungen der Leistungskontakte und/oder Signalkontakte können dasselbe Signalprotokoll der Steuersignale an den Signalkontakten implizieren. Beispielsweise kann eine Anordnung gemäß SAE J1772 oder Steckertyp-1 oder Combo-1 der Norm IEC 62196-1 und eine Anordnung gemäß VDE-AR-E 2623-2-2 oder Steckertyp-2 oder Combo-2 der Norm IEC 62196-1 dasselbe Signalprotokoll implizieren.

Der Datenbus, beispielsweise der Datenrahmen und/oder das Kommunikationsprotokoll der Kommunikation auf dem Datenbus, kann gemäß einem Controller Area Network (CAN), einem Local Interconnect Network (LIN) oder einem lokalen Datennetz (beispielsweise Ethernet) ausgebildet sein.

Das LIN kann auch LIN-Bus bezeichnet werden. Das LIN (beispielsweise in der Version 2.2A der Spezifikation) kann gemäß der ISO-Norm 17987-1 (beispielsweise für Straßenfahrzeuge) ausgebildet sein.

Das CAN kann auch als CAN-Bus bezeichnet werden. Das CAN kann gemäß der ISO-Normenfamilie 11898 (beispielsweise hinsichtlich der Schicht 1, d.h. der physischen Schicht, und/oder der Schicht 2, d.h. Datensicherungsschicht) ausgebildet sein. Beispielsweise kann die physische Schichte des CAN gemäß der ISO-Norm 11898-2 (Highspeed-CAN), der ISO-Norm 11898-3 (Lowspeed-CAN) oder der ISO-Norm CAN FD ISO 11898-1 (für eine flexible Datenrate, FD, zur Erhöhung der Datenrate in Erweiterung des CAN-Standards) ausgebildet sein.

Der Datenbus, beispielsweise der Datenrahmen der Kommunikation auf dem Datenbus und/oder das Kommunikationsprotokoll der Kommunikation auf dem Datenbus, kann gemäß Ethernet oder der IEEE-Normenfamilie 802.3 ausgebildet sein. Die physische Schicht des Datenbusses kann ein Leitungspaar umfassen, beispielsweise gemäß Automotive Ethernet.

Der Datenbus kann nur ein oder ein einziges Leitungspaar umfassen. Alternativ oder ergänzend kann der Datenbus beispielsweise gemäß CAN, CAN-FD, Local Interconnect Network (LIN), FlexRay oder Ethernet (insbesondere Single-Pair Ethernet oder Automotive Ethernet) ausgebildet sein.

Die Ladedose kann ferner ein mit einem Bordnetz elektrisch leitend verbundenes oder verbindbares Netzteil umfassend, das dazu ausgebildet ist, zumindest den Busknoten und/oder den Signalumsetzer mit elektrischer Leistung aus einem Bordnetz zu speisen. Das Netzteil kann einen Gleichspannungswandler umfassen.

Der Busknoten kann ferner dazu ausgebildet sein, über den Datenbus eine Kennung der Ladetechnik des Ladedose an die Fahrzeugsteuerung auszugeben.

Die Fahrzeugsteuerung des Elektrofahrzeugs kann eine Ladesteuerung (beispielsweise einen On-Bord-Charger, OBC) zum Steuern des Ladestroms beim Laden des Traktionsenergiespeichers und/oder ein Batteriemanagementsystem (BMS) des Traktionsenergiespeichers umfassen.

Die Steuersignale der Ladetechnik-spezifischen Signalkontakte können Pilotsignale umfassen, beispielsweise mindestens ein Steuerpilotsignal (auch: Control Pilot oder CP) zur Steuerung des Ladestroms und/oder ein Annäherungspilotsignal (auch: Proximity Pilot oder PP), und/oder eine Verbindungsprüfung (auch: Connection Status oder CS) zur Feststellung des in der Ladedose aufgenommenen Zustands des Ladesteckers.

Die Steuersignale der Ladetechnik-spezifischen Signalkontakte können Datenbussignale umfassen, vorzugsweise Datenbussignale einer Power-Line Communication (PLC) und/oder Datenbussignale eines Controller Area Networks (CAN).

Die Ladedose kann eine Vielzahl von Funktionen umfassen. Der Busknoten kann ferner dazu ausgebildet sein, in der Kommunikation (beispielsweise nach Maßgabe der Kommunikation über den Datenbus) die Funktionen jeweils zu steuern und/oder die Funktionen jeweils abzufragen (und beispielsweise die Ergebnisse des Abfragens über den Datenbus zu kommunizieren).

Der Busknoten kann zum Steuern der Funktionen jeweils einen elektronischen Treiber umfassen. Alternativ oder ergänzend kann der Busknoten zum Abfragen der Funktionen einen Analog-Digital-Umsetzer (A/D-Umsetzer, auch: A/D-Wandler) umfassen.

Die Ladedose kann Funktionen innerhalb der Ladedose umfassen, beispielsweise einen Temperatursensor zur Erfassung einer Temperatur der Leistungskontakte oder jedes Leistungskontakts für Wechselstrom und/oder einen Temperatursensor zur Erfassung einer Temperatur der Leistungskontakte oder jedes Leistungskontakts für Gleichstrom. Alternativ oder ergänzend kann die Ladedose Funktionen an der Ladedose umfassen, beispielsweise eine von einem Aktor angetriebene Verriegelung einer Ladeklappe der Ladedose und/oder eine von einem Aktor angetriebene Verriegelung des Ladesteckers im in der Ladedose aufgenommenen Zustand.

Ein weiterer Aspekt betrifft einen Satz von Ladedosen. Der Satz von Ladedosen umfasst mindestens eine Ladedose gemäß dem erstgenannten Aspekt, wobei die Ladetechnik-spezifischen Signalkontakte und/oder das Signalprotokoll der Steuersignale an den Ladetechnik-spezifischen Signalkontakten einer ersten Ladetechnik entspricht. Ferner umfasst der Satz von Ladedosen mindestens eine Ladedose gemäß dem erstgenannten Aspekt, wobei die Ladetechnik-spezifischen Signalkontakte und/oder das Signalprotokoll der Steuersignale an den Ladetechnik-spezifischen Signalkontakten einer zweiten Ladetechnik entspricht, die von der ersten Ladetechnik verschieden ist.

Die Ladetechnik kann ein Ladeverfahren und/oder eine Anordnung der Leistungs- und Signalkontakte umfassen. Die Ladetechnik kann regional oder landesspezifisch sein. Ausführungsbeispiele der Ladedosen gemäß der ersten und zweiten Ladetechnik können auch als Ländervarianten bezeichnet werden.

Die Ladetechnik kann eine erste Ladetechnik, beispielsweise für Europa, die Europäische Union (EU), Nordamerika oder die Vereinigten Staaten von Amerika (USA) umfassen. Die erste Ladetechnik kann ein kombiniertes Ladesystem (fachsprachlich: Combined Charging System, CCS) sein, beispielsweise gemäß der europäischen Variante Combo-2 oder der nordamerikanische Variante Combo-1.

Die Ladetechnik kann eine zweite Ladetechnik, beispielsweise für China (CN) oder Japan (JP) umfassen. Die zweite Ladetechnik kann einem Ladesystem CHAdeMO oder ChaoJi entsprechen.

Ein noch weiterer Aspekt betrifft eine Fahrzeugsteuerung, die in einem Elektrofahrzeug eingebaut oder einbaubar ist zum Steuern des Ladens eines Traktionsenergiespeichers des Elektrofahrzeugs mit einem elektrischen Ladestrom durch eine Ladedose des Elektrofahrzeugs. Die Fahrzeugsteuerung umfasst einen Stromanschluss zu einem Bordnetz des Elektrofahrzeugs, der dazu ausgebildet ist, einen Signalumsetzer und einen Busknoten der Ladedose mit elektrischer Leistung zu speisen, wodurch der Signalumsetzer betriebsbereit ist, an Ladetechnik-spezifischen Signalkontakten der Ladedose Steuersignale zum Steuern des Ladestroms zu senden und/oder zu empfangen. Ferner umfasst die Fahrzeugsteuerung einen Busknoten der einen Anschluss zu einem Datenbus umfasst und dazu ausgebildet ist, über den Datenbus mit dem Busknoten der Ladedose zu kommunizieren. Dadurch ist der Busknoten betriebsbereit, den Signalumsetzer zu steuern zum Senden der Steuersignale, wobei die gesendeten Steuersignale der Kommunikation über den Datenbus entsprechen, und/oder zum Empfangen der Steuersignale, wobei die Kommunikation über den Datenbus den empfangenen Steuersignale entspricht.

Die Fahrzeugsteuerung kann ferner jedes Merkmal umfassen, das im Kontext des erstgenannten Aspekts oder des weiteren Aspekts offenbart ist, oder ein dazu korrespondierendes Merkmal.

Nachfolgend wird die Erfindung unter Bezugnahme auf die Zeichnungen anhand bevorzugter Ausführungsbeispiele näher erläutert.

Es zeigen:
- Fig. 1: eine schematische Darstellung einer herkömmlichen Ladedose und einer herkömmlichen Fahrzeugsteuerung, die über einen herkömmlichen Kabelbaum elektrisch verbunden sind;
- Fig. 2: eine schematische Darstellung einer Ladedose und einer Fahrzeugsteuerung, die gemäß einem ersten Ausführungsbeispiel elektrisch verbunden sind;
- Fig. 3: eine schematische Darstellung einer Ladedose für eine erste Ladetechnik und einer Fahrzeugsteuerung, die gemäß dem ersten Ausführungsbeispiel elektrisch verbunden sind;
- Fig. 4: eine schematische Darstellung einer Ladedose für eine zweite Ladetechnik und einer Fahrzeugsteuerung, die gemäß dem ersten Ausführungsbeispiel elektrisch verbunden sind;
- Fig. 5: eine schematische Darstellung einer Ladedose und einer Fahrzeugsteuerung, die gemäß einem zweiten Ausführungsbeispiel elektrisch verbunden sind;
- Fig. 6: eine schematische Darstellung einer Ladedose für die erste Ladetechnik und einer Fahrzeugsteuerung, die gemäß dem zweiten Ausführungsbeispiel elektrisch verbunden sind;
- Fig. 7: eine schematische Darstellung einer Ladedose für die zweite Ladetechnik und einer Fahrzeugsteuerung, die gemäß dem zweiten Ausführungsbeispiel elektrisch verbunden sind;
- Fig. 8: eine schematische Ansicht eines Elektroautos mit Funktionsblöcken zu einer Ladedose für die erste Ladetechnik und einer Fahrzeugsteuerung, die gemäß dem zweiten Ausführungsbeispiel elektrisch verbunden sind;
- Fig. 9: eine schematische Ansicht einer Ladedose für die erste Ladetechnik gemäß dem zweiten Ausführungsbeispiel;
- Fig. 10: eine schematische Ansicht einer Ladedose für die zweite Ladetechnik gemäß dem zweiten Ausführungsbeispiel; und
- Fig. 11: eine schematische Ansicht einer Ladedose für eine dritte Ladetechnik gemäß dem zweiten Ausführungsbeispiel.

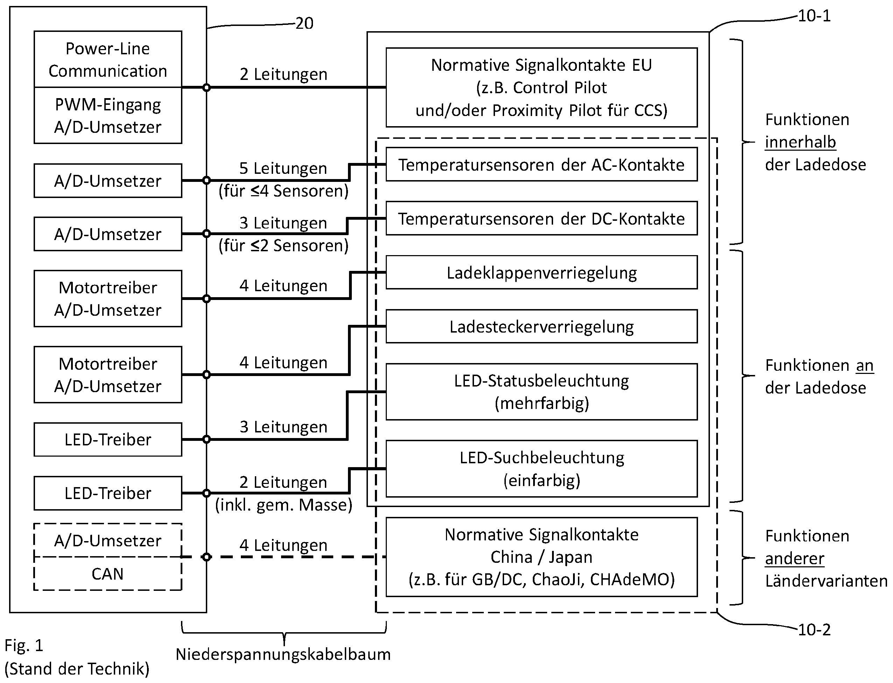

Die Fig. 1 zeigt blockschematisch eine herkömmliche Ladedose 10-1 für eine erste Ladetechnik und eine herkömmliche zweite Ladedose 10-2 für eine zweite Ladetechnik, die von der ersten hinsichtlich normativer Signalkontakte verschieden ist. Die herkömmlichen Ladedosen 10-1 oder 10-2 müssen jeweils über einen komplexen Kabelbaum mit der herkömmlichen Fahrzeugsteuerung 20 elektrisch leitend verbunden werden.

Die herkömmliche Ladedose 10-1 oder 10-2 ist über einen Niederspannungskabelbaum mit der übergeordneten Fahrzeugsteuerung 20 verbunden. Elektrische Funktionen der Ladedose 10-1 oder 10-2, einschließlich von Baugruppen in unmittelbarer Nähe der Ladedose, werden herkömmlicherweise über einen solchen Kabelbaum angesteuert.

Wie dem Referenzbeispiel der Fig. 1 zu entnehmen ist, muss in der herkömmlichen Fahrzeugsteuerung 20 eine ausreichende Menge von Ein- und Ausgängen einschließlich der zugehörigen Elektronik und Steuersoftware (beispielsweise Signalprotokolle der Steuersignale) zur Ansteuerung und zum Erfassen der Steuersignale unterschiedlicher Ladetechniken vorgehalten werden. Beispielsweise ist die gestrichelt gezeichnete Schnittstelle für Steuersignale einer zweiten Ladetechnik (z.B. für China oder Japan) der Fahrzeugsteuerung 20 ungenutzt, wenn die Fahrzeugsteuerung 20 mit der Ladedose 10-1 für eine erste Ladetechnik (z.B. für Europa oder Nordamerika) verbunden ist.

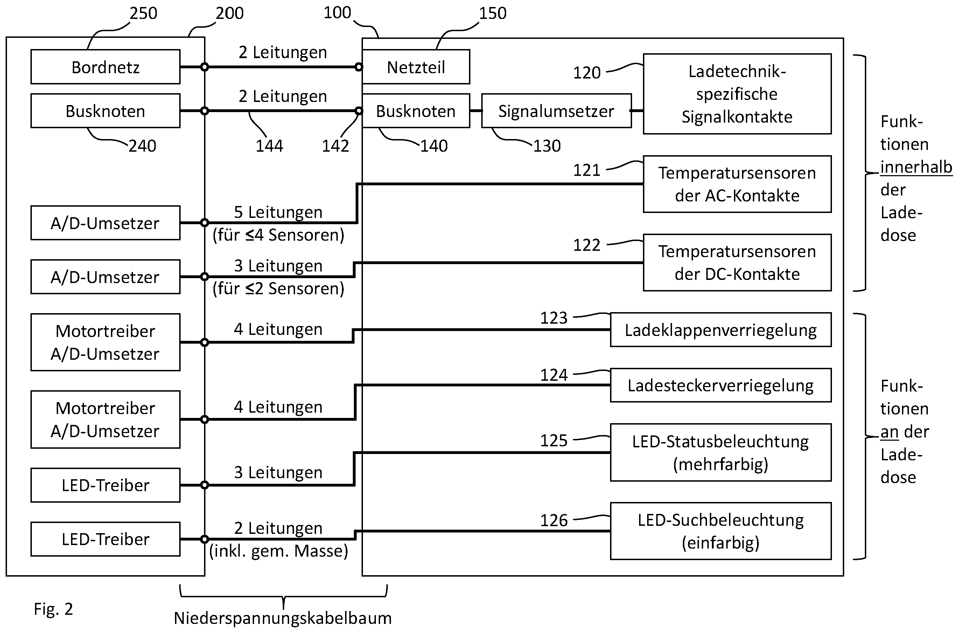

Fig. 2 zeigt blockschematisch eine Ladedose 100 für eine Ladetechnik und eine Fahrzeugsteuerung 200 gemäß einem ersten Ausführungsbeispiel.

Die Ladedose 100 ist in einem Elektrofahrzeug eingebaut oder einbaubar. Die Ladedose 100 ist zur Aufnahme eines Ladesteckers zum Laden eines Traktionsenergiespeichers des Elektrofahrzeugs mit einem elektrischen Ladestrom ausgebildet. Dazu umfasst die Ladedose 100 Leistungskontakte, die dazu ausgebildet sind, korrespondierende Leistungskontakte des Ladesteckers im in der Ladedose 100 aufgenommenen Zustand zu kontaktieren zum elektrischen Leiten des Ladestroms. Ferner umfasst die Ladedose 100 Ladetechnik-spezifische Signalkontakte 120, die dazu ausgebildet sind, korrespondierende Signalkontakte des Ladesteckers im in der Ladedose 100 aufgenommenen Zustand zu kontaktieren zum Steuern des Ladestroms. Ferner umfasst die Ladedose 100 einen Signalumsetzer 130, der dazu ausgebildet ist, an den Ladetechnik-spezifischen Signalkontakten 120 der Ladedose 100 Steuersignale zum Steuern des Ladestroms zu senden und/oder zu empfangen. Ferner umfasst die Ladedose 100 einen Busknoten 140, der einen Anschluss 142 zu einem Datenbus 144 umfasst und dazu ausgebildet ist, über den Datenbus 144 mit einer Fahrzeugsteuerung 200 des Elektrofahrzeugs zu kommunizieren. Der Busknoten 140 steuert den Signalumsetzer 130 zum Senden der Steuersignale, wobei die gesendeten Steuersignale der Kommunikation über den Datenbus 144 entsprechen. Beispielsweise geben die über den Datenbus am Busknoten 140 erhaltenen Daten die zu sendenden Steuersignal vor. Alternativ oder ergänzend steuert der Busknoten 140 den Signalumsetzer 130 zum Empfangen der Steuersignale, wobei die Kommunikation über den Datenbus 144 den empfangenen Steuersignale entspricht. Beispielsweise leitet der Busknoten 140 die empfangenen Steuersignale als Daten (beispielsweise als Nutzdaten in einem Datenrahmen) über den Datenbus 144 an die Fahrzeugsteuerung 200 weiter.

Das erste Ausführungsbeispiel der Fahrzeugsteuerung 200 ist in einem Elektrofahrzeug eingebaut oder einbaubar. Die Fahrzeugsteuerung 200 ist zum Steuern des Ladens eines Traktionsenergiespeichers des Elektrofahrzeugs ausgebildet mit einem elektrischen Ladestrom durch eine Ladedose 100 des Elektrofahrzeugs. Die Fahrzeugsteuerung 200 umfasst einen Stromanschluss zu einem Bordnetz 250 des Elektrofahrzeugs, der dazu ausgebildet ist, einen Signalumsetzer 130 und einen Busknoten 140 der Ladedose 100 mit elektrischer Leistung zu speisen, wodurch der Signalumsetzer 130 betriebsbereit ist, an Ladetechnik-spezifischen Signalkontakten 120 der Ladedose 100 Steuersignale zum Steuern des Ladestroms zu senden und/oder zu empfangen. Ferner umfasst die Fahrzeugsteuerung 200 einen Busknoten 240 der einen Anschluss zu einem Datenbus 144 umfasst und dazu ausgebildet ist, über den Datenbus 144 mit dem Busknoten 140 der Ladedose 100 zu kommunizieren, wodurch der Busknoten 140 betriebsbereit ist, den Signalumsetzer (130) zu steuern zum Senden der Steuersignale, wobei die gesendeten Steuersignale der Kommunikation über den Datenbus 144 entsprechen. Alternativ oder ergänzend ist der Busknoten 140 betriebsbereit, den Signalumsetzer 130 zu steuern zum Empfangen der Steuersignale, wobei die Kommunikation über den Datenbus 144 den empfangenen Steuersignale entspricht.

Ausführungsbeispiele der Ladedose 100 und/oder der Fahrzeugsteuerung 200 können an Automobilhersteller gelieferte Baugruppen von Elektrofahrzeugen sein.

Der Datenbus 144 kann ein CAN-Bus, ein Ethernet, vorzugsweise Single-Pair-Ethernet oder Automotive Ethernet, ein Local Interconnect Network (LIN, auch LIN-Bus genannt) oder ein Feldbus für den Einsatz im Automobil, vorzugsweise FlexRay, sein.

Aufgrund des Datenbusses 144, der nicht notwendigerweise Ladetechnik-spezifisch sein muss, können Ausführungsbeispiele der Erfindung international unterschiedliche normative Anforderungen (beispielsweise an die Steuersignal und die Signalkontakte 120) erfüllen, ohne dass die Fahrzeugsteuerung 200 Elektronik vorhalten muss, um unterschiedliche Varianten der Ladedosen 10-1 und 10-2 (das heißt herkömmliche Ladedosen für verschiedene Ladetechniken) individuell anzusteuern.

Die verschiedenen Ladetechniken können einen chinesischen Standard (z.B. GB/AC, GB/DC, ChaoJi), den japanischen Standard (z.B. CHAdeMO), und/oder den europäischen Standard (z.B. Combined Charging System, CCS) betreffen. Im Elektrofahrzeug kann in allen Ländervarianten die gleiche Fahrzeugsteuerung verbaut sein. Je nach Ländereinsatz wird die Ladedose 100 entsprechend der Ladetechnik verbaut, womit keine nicht benötigten Funktionen im Elektrofahrzeug verbaut bleiben.

Bereits das erste Ausführungsbeispiel der Ladedose 100 bzw. der Fahrzeugsteuerung 200 kann vermeiden, dass unterschiedliche Ländervarianten für unterschiedliche Zielmärkte (beispielsweise Europa, Amerika und Asien) unterschiedliche Kommunikationsschnittstellen (CAN-Bus und Power-Line Communication) sowie eine unterschiedliche Anzahl von Signalkontakt 120 (beispielsweise als Anschlussmöglichkeiten oder Schnittstellen) in der Fahrzeugsteuerung 200 vorgehalten werden müssen. Dies reduziert die Komplexität und somit die Kosten der Fahrzeugsteuerung 200. Zudem sind keine unterschiedliche Kabelbäume für die unterschiedlichen Ländervarianten erforderlich.

Beispielsweise sind die Kommunikationsschnittstellen und länderspezifischen Bestandteile der herkömmlichen Fahrzeugsteuerung 20 nur im jeweils zur Ladetechnik gehörenden Umfang in die Ladedose 100 integriert. Alternativ oder ergänzend ist der Datenbus 144 eine einheitliche länderunabhängige Kommunikationsschnittstelle zwischen der Fahrzeugsteuerung 200 und der Ladedose 100. Die länderspezifische Varianz kann dadurch auf eine Baugruppe, nämlich die jeweilige länderspezifische Ladedose 100, minimiert werden.

In jedem Ausführungsbeispiel kann die Ladedose 100 Funktionen innerhalb der Ladedose und/oder Funktionen an der Ladedose 100 (beispielsweise in der Umgebung der Ladedose oder die Ladedose schützende Funktionen) umfassen. Beispielsweise kann in jedem Ausführungsbeispiel die Ladedose 100 mindestens eine der folgenden Funktionen umfassen. Die Ladedose 100 kann Sensoren 121 und/oder 122 zu Erfassung der Temperatur an Leistungskontakten (beispielsweise für Wechselstrom bzw. Gleichstrom) während des Ladens (d.h. während des Ladevorganges). Alternativ oder ergänzend kann die Ladedose 100 Aktuatorik 124 zur Verriegelung des Ladesteckers umfassen, beispielsweise einen Sensor zur Erfassung der Verriegelungsstellung und/oder Entriegelungsstellung und einen Aktor zum Antrieb der Verriegelung zwischen der Verriegelungsstellung und der Entriegelungsstellung. Alternativ oder ergänzend kann die Ladedose 100 Leuchtmittel (vorzugsweise licht-emittierende Dioden, LEDs) als

Statusbeleuchtung 125 und/oder Suchbeleuchtung 126 umfassen. Alternativ oder ergänzend kann die Ladedose 100 eine Verriegelung 123 einer Ladeklappe (analog zur ehemaligen Tankklappe bei brennkraftbetriebenen Fahrzeugen) umfassen, beispielsweise einen Sensor zur Erfassung der Verriegelungsstellung und/oder Entriegelungsstellung der Verriegelung 123 der Ladeklappe und einen Aktor zum Antrieb der Verriegelung 123 zwischen der Verriegelungsstellung und der Entriegelungsstellung.

Die normativ geforderte Signalleitungen 120 und das zugehörige Signalprotokoll kann je nach Ladetechnik (beispielsweise je nach Ländervariante) Steuersignale wie Control Pilot und Proximity Pilot umfassen oder Steuersignale für höhere Datenraten oder komplexere Meldungen (beispielsweise PLC für eine erste Ladetechnik oder CAN-Bus für eine zweite Ladetechnik).

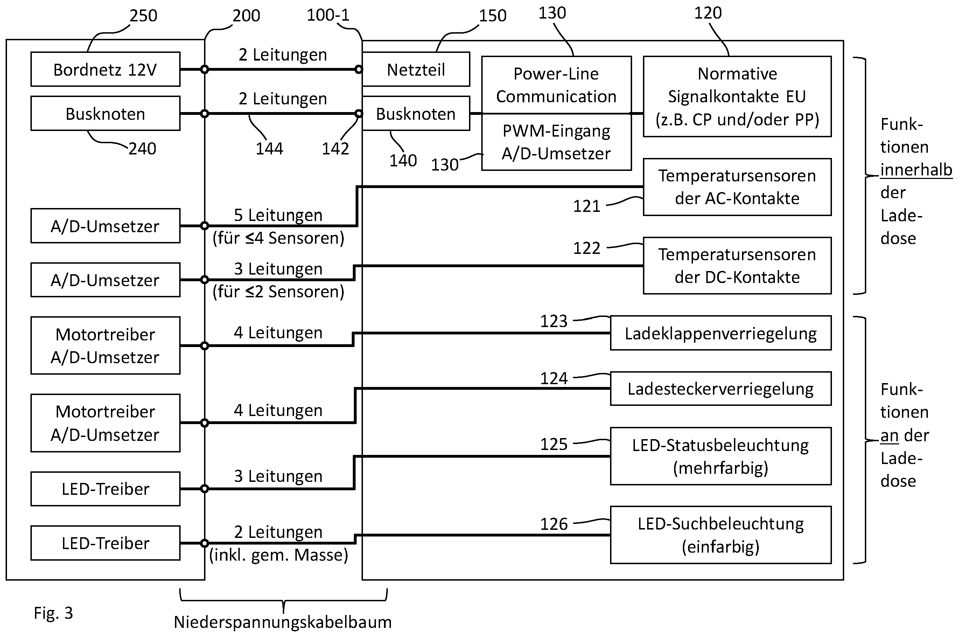

Fig. 3 zeigt eine erste Variante 100-1 des ersten Ausführungsbeispiels der Ladedose 100 für eine erste Ladetechnik. Die erste Ladetechnik umfasst normativ geforderte Signalkontakte 120 für Control Pilot (CP) und Proximity Pilot (PP), die an einen Eingang zur Erfassung einer Pulsweitenmodulation (als Beispiel des Signalumsetzers 130) angeschlossen sind. Ferner nutzt die erste Ladetechnik die Signalkontakte 120 zumindest teilweise (beispielsweise den Signalkontakt 120 für CP) zur PLC. Hierzu ist der Signalkontakte 120 ferner an ein PLC-Modem (als weiteres Beispiel des Signalumsetzers 130) angeschlossen.

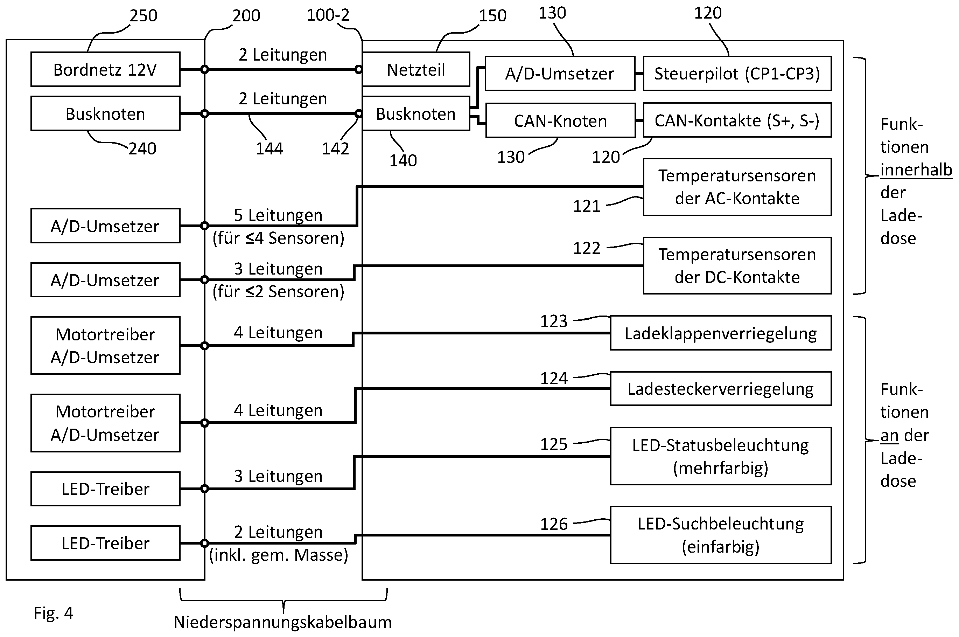

Fig. 4 zeigt eine zweite Variante 100-2 des ersten Ausführungsbeispiels der Ladedose 100 für eine zweite Ladetechnik. Die zweite Ladetechnik umfasst normativ geforderte (beispielsweise länderspezifische) Signalkontakte 120 (und/oder beispielsweise für Control Pilot CP1 bis CP3) die an einen Analog-Digital-Umsetzer (als Beispiel des Signalumsetzers 130) angeschlossen sind. Alternativ oder ergänzend nutzt die zweite Ladetechnik die weiteren Signalkontakte 120 (beispielsweise Signalkontakt S+ und S-) für einen CAN-Bus. Hierzu sind die weiteren Signalkontakte 120 an ein CAN-Modem (als weiteres Beispiel des Signalumsetzers 130) angeschlossen.

Auf das eingangs genannte Referenzbeispiel der Fig. 1 zurückkommend, ist diesem ferner zu entnehmen, dass zur Verbindung der herkömmlichen Ladedose 10-1 oder 10-2 (einschließlich der notwendigen Komponenten für die elektrischen Funktionen) mit der übergeordneten Fahrzeugsteuer 20 mehr als 20 Signalleitungen notwendig sind.

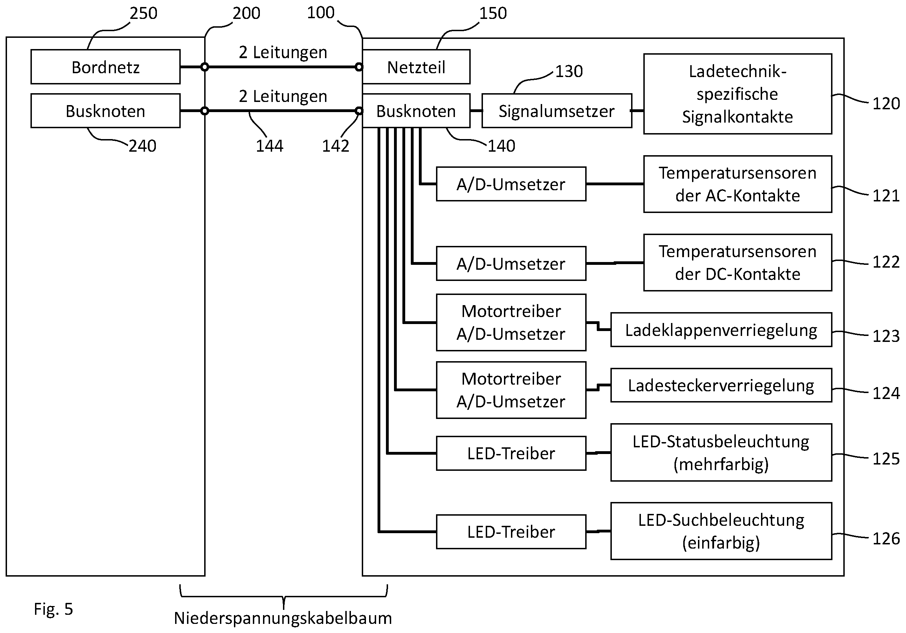

Die Ladedose 100 bzw. die Fahrzeugsteuerung 200 gemäß einem in Fig. 5 blockschematisch gezeigten zweiten Ausführungsausbeispiel unterscheiden sich vom ersten Ausführungsbeispiel dadurch, dass zumindest ein Teil der elektrischen Funktionen 121 bis 126 der Ladedose 100 vom Busknoten 140 angesteuert und/oder ausgewertet werden. Dazu kann die für die genannten Funktionen 121 bis 126 erforderliche Elektronik und/oder Steuersoftware anstatt in der herkömmlichen Fahrzeugsteuerung 20 im zweiten Ausführungsbeispiel der Ladedose 100 implementiert sein.

Hierzu kann Elektronik und Steuersoftware in der Ladedose 100 eingesetzt werden. Beispielsweise weist der Busknoten 140 einen Prozessor und einen mit dem Prozessor in Datenkommunikation stehenden Speicher auf, in dem Anweisungen kodiert sind, aufgrund derer bei Ausführung durch den Prozessor die Ladedose mindestens eine der Funktionen 121 bis 126 ansteuert und/oder erfasst (beispielsweise abfragt), vorzugsweise in Kommunikation mit der Fahrzeugsteuerung 200 über den Ladetechnik-unspezifischen Datenbus 144.

Die elektronischen Baugruppen zur Ansteuerung und/oder zum Erfassen der Funktionen werden unter Einhaltung notwendiger Abstände zur Isolation zu den hochspannungsführenden Teilen, beispielsweise den Leistungskontakten, direkt in der Ladedose 100 platziert. Die Kommunikation mit der Fahrzeugsteuerung erfolgt über einen fahrzeugtypischen Datenbus 144 (d.h. einen Kommunikationsbus), z.B. CAN, LIN**,** Ethernet oder andere. Hierdurch erfolgt eine erhebliche Reduktion der Leitungsanzahl und eine Vereinfachung der Montage.

Alternativ oder ergänzend kann das zweite Ausführungsbeispiel die Kosten zur Entwicklung und Herstellung der Fahrzeugsteuerung 200 senken. Alternativ oder ergänzend kann die Fahrzeugsteuerung 200 unabhängig von einer Exportregion des Elektrofahrzeugs in einem früheren Prozessschritt der Fertigung (beispielsweise zusammen mit Fahrerassistenzfunktionen) verbaut werden. Ferner kann durch den Wegfall ungenutzter Schnittstellen und Funktionen der Stromverbrauch und die Zuverlässigkeit der Fahrzeugsteuerung 200 verbessert werden.

Alternativ oder ergänzend können gemäß dem zweiten Ausführungsbeispiel einzelne oder alle Funktionen aus dem Umfeld der Ladedose 100 in die Ladedose 100 integriert werden. Dadurch kann ein Bauraum der Fahrzeugsteuerung 200 gegenüber der herkömmlichen Fahrzeugsteuerung 20 und ein Platzbedarf des Datenbusses 144 gegenüber dem herkömmlichen Kabelbaum der Fig. 1 reduziert werden.

Alternativ oder ergänzend können Elektronik und Steuersoftware der Fahrzeugsteuerung 200 vereinfacht und Kosten deren Entwicklung und Herstellung reduziert werden. Die Reduktion der Leitungsanzahl zwischen Fahrzeugsteuerung 200 und Ladedose 100 kann eine schnellere Montage und größere Zuverlässigkeit ermöglichen.

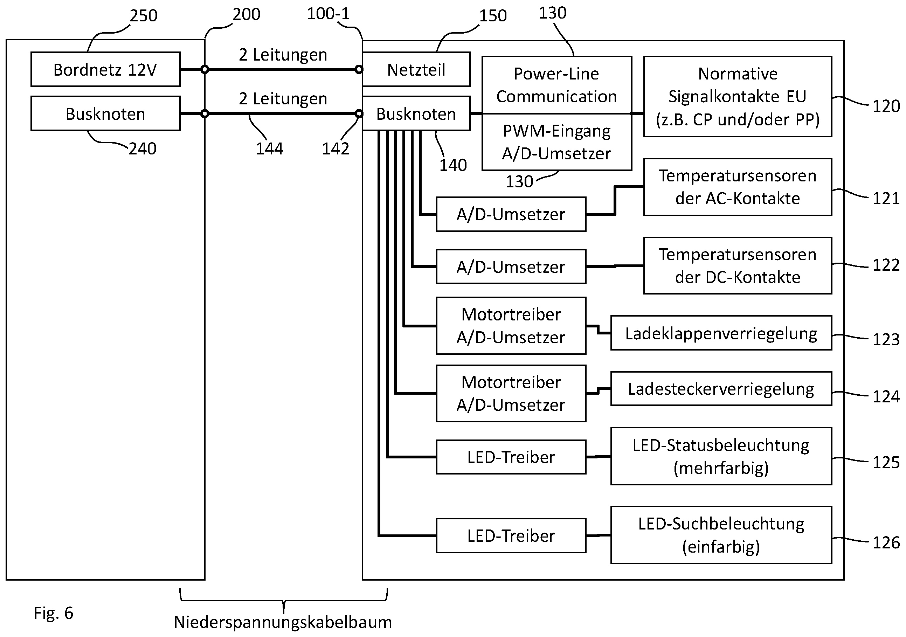

Fig. 6 zeigt eine erste Variante 100-1 des zweiten Ausführungsbeispiels der Ladedose 100 für die erste Ladetechnik. Gemäß der ersten Ladetechnik sind Signalkontakte 120 für CP und PP, an einen Eingang zur Erfassung einer Pulsweitenmodulation (als Beispiel des Signalumsetzers 130) angeschlossen. Ferner nutzt die erste Ladetechnik den CP-Signalkontakt 120 zur PLC, indem ein vom Busknoten 140 gesteuertes PLC-Modem (als weiteres Beispiel des Signalumsetzers 130) an den CP-Signalkontakt 120 angeschlossen ist.

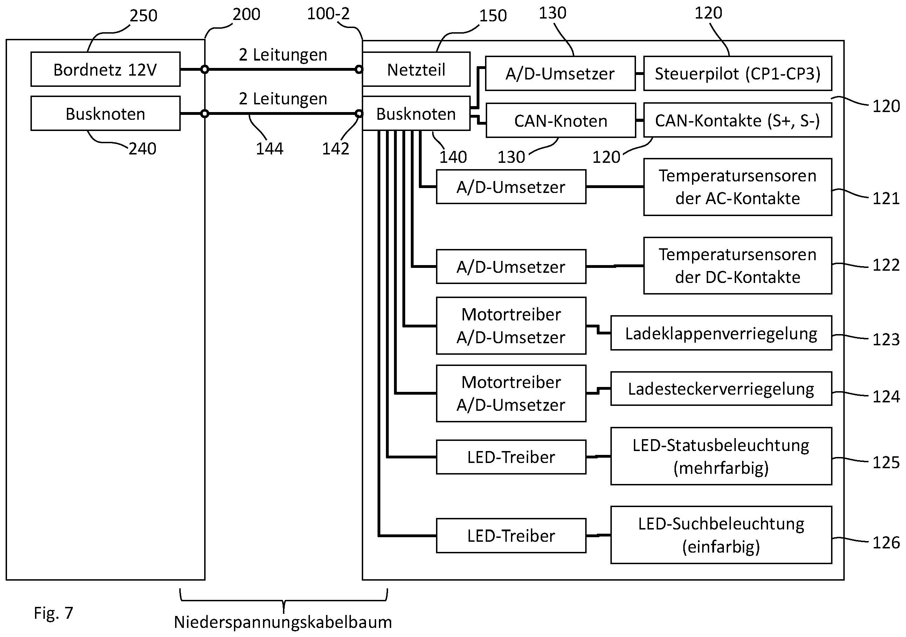

Fig. 7 zeigt eine zweite Variante 100-2 des zweiten Ausführungsbeispiels der Ladedose 100 für die zweite Ladetechnik. Die zweite Ladetechnik kann Signalkontakte 120 umfassen, die hier beispielhaft als CP1 bis CP3 bezeichnet sind, und die an einen vom Busknoten 140 gesteuerten Analog-Digital-Umsetzer (als Beispiel des Signalumsetzers 130) angeschlossen sind. Alternativ oder ergänzend nutzt die zweite Ladetechnik die weiteren Signalkontakte 120 (beispielsweise Signalkontakt S+ und S-) für einen CAN-Bus. Hierzu sind die weiteren Signalkontakte 120 an ein CAN-Modem (als weiteres Beispiel des Signalumsetzers 130) angeschlossen.

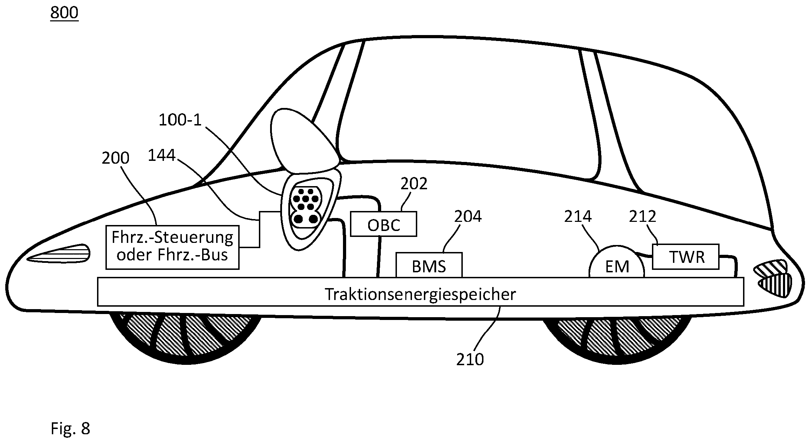

Fig. 8 zeigt eine schematische Ansicht eines Elektroautos 800 mit Funktionsblöcken zu einer Ladedose 100 für die erste Ladetechnik und einer Fahrzeugsteuerung 200, die gemäß dem zweiten Ausführungsbeispiel elektrisch verbunden sind. Während das Elektrofahrzeug für die erste Ladetechnik und zweiten Ausführungsbeispiel (ausschließlich verbunden über den Datenbus 144) gezeigt ist, können stattdessen oder ergänzend Merkmale des ersten Ausführungsbeispiels und/oder einer anderen Ladetechnik realisiert sein.

Die Leistungskontakte für Gleichstrom der Ladedose 100 können direkt mit dem Traktionsenergiespeicher 210 oder einem Batteriemanagementsystem (BMS) 204 des Traktionsenergiespeichers 210 elektrisch leitend verbunden sein. Alternativ oder ergänzend können die Leistungskontakte für Wechselstrom der Ladedose 100 über eine On-Board-Ladesteuerung 202 (auch: On-Board-Charger, OBC) mit dem Traktionsenergiespeicher 210 elektrisch leitend verbunden sein.

Über einen Traktionswechselrichter (TWR) 214 speist der Traktionsenergiespeicher 210 eine Elektromaschine 212 beziehungsweise rekuperiert kinetische Energie des Elektrofahrzeugs 800 von der Elektromaschine 212. Eine Abtriebswelle der Elektromaschine 212 treibt mindestens eine Achse des Elektrofahrzeugs 800 an.

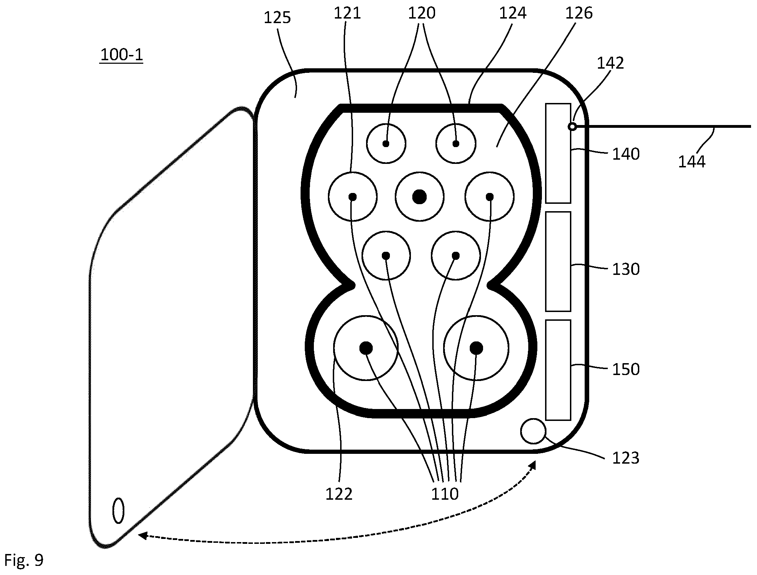

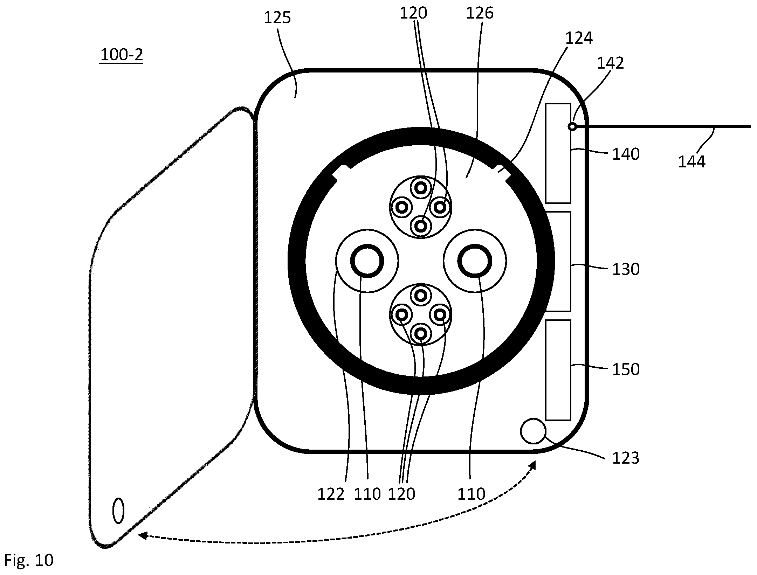

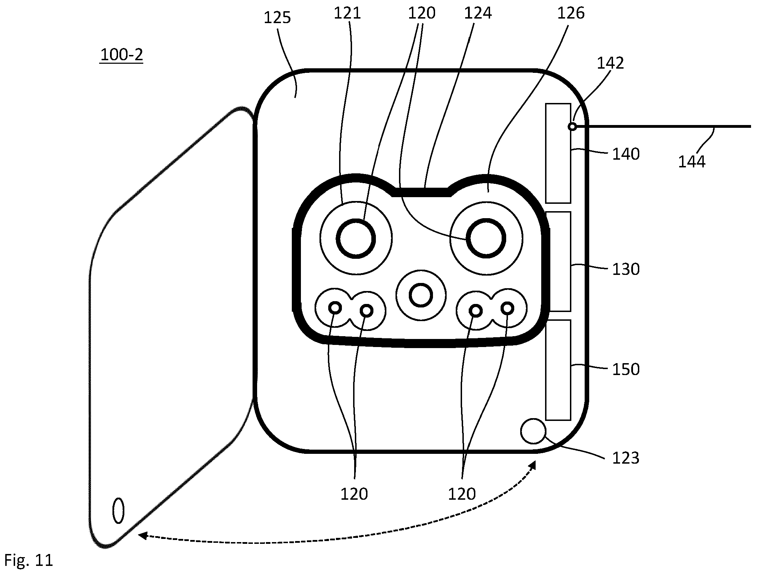

Fig. 9 zeigt eine schematische Ansicht einer Ladedose 100-1 für die erste Ladetechnik, beispielsweise CCS, gemäß dem zweiten Ausführungsbeispiel. Fig. 10 zeigt eine schematische Ansicht einer Ladedose 100-2 für die zweite Ladetechnik, beispielsweise CHAdeMO, gemäß dem zweiten Ausführungsbeispiel. Fig. 11 zeigt eine schematische Ansicht einer Ladedose 100-2 für eine dritte Ladetechnik oder eine dritte Version der zweiten Ladetechnik, beispielsweise ChaoJi, gemäß dem zweiten Ausführungsbeispiel.

Obwohl die Erfindung in Bezug auf exemplarische Ausführungsbeispiele beschrieben worden ist, ist für Fachkundige ersichtlich, dass verschiedene Änderungen vorgenommen werden können und Äquivalente als Ersatz verwendet werden können. Ferner können viele Modifikationen vorgenommen werden, um eine bestimmte Ladetechnik oder ein bestimmtes Signalprotokoll an die Lehre der Erfindung anzupassen. Folglich ist die Erfindung nicht auf die offenbarten Ausführungsbeispiele beschränkt, sondern umfasst alle Ausführungsbeispiele und Ladetechniken, die in den Bereich der beigefügten Patentansprüche fallen.

**Bezugszeichenliste**

| | |
|---|---|
| Herkömmliche Ladedose mit EU-Ladetechnik | 10-1 |
| Herkömmliche Ladedose mit JP/CN-Ladetechnik | 10-2 |
| Herkömmliche Fahrzeugsteuerung mit EU- und JP/CN-Ladetechnik | 20 |
| Ladedose gemäß einer Ladetechnik | 100 |
| Ladedose gemäß erster Ladetechnik, beispielsweise Ländervariante für EU | 100-1 |
| Ladedose gemäß zweiter Ladetechnik, beispielsweise Ländervariante für JP oder CN | 100-2 |
| Leistungskontakte | 110 |
| Ladetechnik-spezifische Signalkontakte | 120 |
| Temperatursensoren der AC-Leistungskontakte | 121 |
| Temperatursensoren der DC-Leistungskontakte | 122 |
| Ladeklappenverriegelung | 123 |
| Ladesteckerverriegelung | 124 |
| Statusbeleuchtung, vorzugsweise mehrfarbig | 125 |
| Suchbeleuchtung, vorzugsweise einfarbig | 126 |
| Signalumsetzer der Ladedose | 130 |
| Busknoten der Ladedose | 140 |
| Anschluss der Ladedose zum Datenbus | 142 |
| Datenbus | 144 |
| Netzteil der Ladedose | 150 |
| Fahrzeugsteuerung | 200 |
| On-Board-Ladesteuerung (auch: On-Board-Charger, OBC) | 202 |
| Batteriemanagementsystem (BMS) | 204 |
| Traktionsenergiespeicher | 210 |
| Elektromaschine | 212 |
| Traktionswechselrichter (TWR) | 214 |
| Busknoten der Fahrzeugsteuerung | 240 |
| Bordnetz des Elektrofahrzeugs zur Niederspannungsversorgung | 250 |
| Elektrofahrzeug | 800 |

## Patentansprüche

1. Ladedose (100), die in einem Elektrofahrzeug (800) eingebaut oder einbaubar ist zur Aufnahme eines Ladesteckers zum Laden eines Traktionsenergiespeichers (210) des Elektrofahrzeugs (800) mit einem elektrischen Ladestrom, umfassend:
Leistungskontakte (110), die dazu ausgebildet sind, korrespondierende Leistungskontakte des Ladesteckers im in der Ladedose (100) aufgenommenen Zustand zu kontaktieren zum elektrischen Leiten des Ladestroms;
Ladetechnik-spezifische Signalkontakte (120), die dazu ausgebildet sind, korrespondierende Signalkontakte des Ladesteckers im in der Ladedose (100) aufgenommenen Zustand zu kontaktieren zum Steuern des Ladestroms;
einen Signalumsetzer (130), der dazu ausgebildet ist, an den Ladetechnik-spezifischen Signalkontakten (120) der Ladedose (100) Steuersignale zum Steuern des Ladestroms zu senden und/oder zu empfangen; die Ladedose (100) **gekennzeichnet durch**
einen Busknoten (140), der einen Anschluss (142) zu einem Datenbus (144) umfasst und dazu ausgebildet ist, über den Datenbus (144) mit einer Fahrzeugsteuerung (200) des Elektrofahrzeugs (800) zu kommunizieren und den Signalumsetzer (130) zu steuern
- zum Senden der Steuersignale, wobei die gesendeten Steuersignale der Kommunikation über den Datenbus (144) entsprechen, und/oder
- zum Empfangen der Steuersignale, wobei die Kommunikation über den Datenbus (144) den empfangenen Steuersignale entspricht.

2. Ladedose (100) nach Anspruch 1, wobei die gesendeten und/oder empfangenen Steuersignale Daten in einem Datenrahmen der Kommunikation über den Datenbus (144) entsprechen.

3. Ladedose (100) nach Anspruch 2,
wobei der Busknoten (140) den Datenrahmen der Kommunikation über den Datenbus (144) von der Fahrzeugsteuerung (200) empfängt und in Reaktion auf den empfangenen Datenrahmen den Signalumsetzer (130) zum Senden der Steuersignale steuert, und/oder
wobei der Signalumsetzer (130) die Steuersignale an den Signalkontakten (120) empfängt und der Busknoten (140) in Reaktion auf das Empfangen der Steuersignale den Datenrahmen der Kommunikation über den Datenbus (144) an die Fahrzeugsteuerung (200) sendet.

4. Ladedose (100) nach einem der Ansprüche 1 bis 3,
wobei ein Kommunikationsprotokoll der Kommunikation auf dem Datenbus (144) Ladetechnik-unabhängig ist, und/oder
wobei ein Signalprotokoll der gesendeten und/oder empfangenen Steuersignale an den Signalkontakten (120) Ladetechnik-spezifisch ist.

5. Ladedose (100) nach einem der Ansprüche 1 bis 4, wobei der Datenbus (144), vorzugsweise der Datenrahmen und/oder das Kommunikationsprotokoll der Kommunikation auf dem Datenbus (144), ausgebildet ist gemäß
- einem Controller Area Network, CAN, vorzugsweise einem CAN mit flexibler Datenrate, CAN-FD,
- einem Local Interconnect Network, LIN, oder
- einem lokalen Datennetz, vorzugsweise Automotive Ethernet.

6. Ladedose (100) nach einem der Ansprüche 1 bis 5, wobei der Datenbus (144) nur ein Leitungspaar umfasst, optional gemäß Single-Pair Ethernet, Automotive Ethernet, CAN oder CAN-FD.

7. Ladedose (100) nach einem der Ansprüche 1 bis 6, ferner ein mit einem Bordnetz (250) elektrisch leitend verbundenes oder verbindbares Netzteil (150) umfassend, das dazu ausgebildet ist, zumindest den Busknoten (140) und/oder den Signalumsetzer (130) mit elektrischer Leistung aus einem Bordnetz (250) zu speisen.

8. Ladedose (100) nach einem der Ansprüche 1 bis 7, wobei der Busknoten (140) ferner dazu ausgebildet ist, über den Datenbus (144) eine Kennung der Ladetechnik des Ladedose (100) an die Fahrzeugsteuerung (200) auszugeben.

9. Ladedose (100) nach einem der Ansprüche 1 bis 8, wobei die Fahrzeugsteuerung (200) des Elektrofahrzeugs (800) eine Ladesteuerung (202) zum Steuern des Ladestrom beim Laden des Traktionsenergiespeichers (210) und/oder ein Batteriemanagementsystem (204) des Traktionsenergiespeichers (210) umfasst.

10. Ladedose (100) nach einem der Ansprüche 1 bis 9, wobei die Steuersignale der Ladetechnik-spezifischen Signalkontakte (120) Pilotsignale umfassen, vorzugsweise mindestens ein Steuerpilotsignal, CP, zur Steuerung des Ladestroms und/oder ein Annäherungspilotsignal, PP, oder eine Verbindungsprüfung, CS, zur Feststellung des in der Ladedose (100) aufgenommenen Zustands des Ladesteckers.

11. Ladedose (100) nach einem der Ansprüche 1 bis 10, wobei die Steuersignale der Ladetechnik-spezifischen Signalkontakte (120) Datenbussignale umfassen, vorzugsweise Datenbussignale einer Power-Line Communication, PLC und/oder Datenbussignale eines Controller Area Networks, CAN.

12. Ladedose (100) nach einem der Ansprüche 1 bis 11, wobei die Ladedose (100) eine Vielzahl von Funktionen umfasst, und der Busknoten (140) ferner dazu ausgebildet ist, nach Maßgabe der Kommunikation über den Datenbus (144) die Funktionen jeweils zu steuern und/oder die Funktionen jeweils abzufragen und die Ergebnisse des Abfragens über den Datenbus (144) zu kommunizieren.

13. Ladedose (100) nach Anspruch 12, wobei die Ladedose (100) Funktionen innerhalb der Ladedose (100) umfasst, vorzugsweise einen Temperatursensor (121) zur Erfassung einer Temperatur der Leistungskontakte (110) oder jedes Leistungskontakts (110) für Wechselstrom und/oder einen Temperatursensor (122) zur Erfassung einer Temperatur der Leistungskontakte (110) oder jedes Leistungskontakts (110) für Gleichstrom.

14. Ladedose (100) nach Anspruch 12 oder 13, wobei die Ladedose (100) Funktionen an der Ladedose (100) umfasst, vorzugsweise eine von einem Aktor angetriebene Verriegelung (123) einer Ladeklappe der Ladedose (100) und/oder eine von einem Aktor angetriebene Verriegelung (124) des Ladesteckers im in der Ladedose (100) aufgenommenen Zustand.

15. Satz von Ladedosen (100-1, 100-2), umfassend:
mindestens eine Ladedose (100) gemäß einem der Ansprüche 1 bis 14, wobei die Ladetechnik-spezifischen Signalkontakte (120) und/oder das Signalprotokoll der Steuersignale an den Ladetechnik-spezifischen Signalkontakten (120) einer ersten Ladetechnik entspricht; und
mindestens eine Ladedose (100) gemäß einem der Ansprüche 1 bis 14, wobei die Ladetechnik-spezifischen Signalkontakte (120) und/oder das Signalprotokoll der Steuersignale an den Ladetechnik-spezifischen Signalkontakten (120) einer zweiten Ladetechnik entspricht, die von der ersten Ladetechnik verschieden ist.

16. Fahrzeugsteuerung (200), die in einem Elektrofahrzeug (800) eingebaut oder einbaubar ist zum Steuern des Ladens eines Traktionsenergiespeichers (210) des Elektrofahrzeugs (800) mit einem elektrischen Ladestrom durch eine Ladedose (100) des Elektrofahrzeugs (800), umfassend:
einen Stromanschluss zu einem Bordnetz (250) des Elektrofahrzeugs, der dazu ausgebildet ist, einen Signalumsetzer (130) und einen Busknoten (140) der Ladedose (100) mit elektrischer Leistung zu speisen, wodurch der Signalumsetzer (130) betriebsbereit ist, an Ladetechnik-spezifischen Signalkontakten (120) der Ladedose (100) Steuersignale zum Steuern des Ladestroms zu senden und/oder zu empfangen; und
einen Busknoten (240) der einen Anschluss zu einem Datenbus (144) umfasst und dazu ausgebildet ist, über den Datenbus (144) mit dem Busknoten (140) der Ladedose (100) zu kommunizieren, wodurch der Busknoten (140) betriebsbereit ist, den Signalumsetzer (130) zu steuern
- zum Senden der Steuersignale, wobei die gesendeten Steuersignale der Kommunikation über den Datenbus (144) entsprechen, und/oder
- zum Empfangen der Steuersignale, wobei die Kommunikation über den Datenbus (144) den empfangenen Steuersignale entspricht.

## Claims

1. Charging socket (100), which is installed or can be installed in an electric vehicle (800), for receiving a charging plug for charging a traction energy store (210) of the electric vehicle (800) with an electrical charging current, comprising:
power contacts (110) which are designed to make contact with corresponding power contacts of the charging plug in the state received in the charging socket (100) for the purpose of electrically conducting the charging current;
charging-technology-specific signal contacts (120) which are designed to make contact with corresponding signal contacts of the charging plug in the state received in the charging socket (100) for the purpose of controlling the charging current;
a signal converter (130) which is designed to transmit and/or receive control signals for controlling the charging current at the charging-technology-specific signal contacts (120) of the charging socket (100);
the charging socket (100) **characterized by** a bus node (140) which comprises a connection (142) to a data bus (144) and is designed to communicate via the data bus (144) with a vehicle controller (200) of the electric vehicle (800) and to control the signal converter (130)
- to transmit the control signals, wherein the transmitted control signals correspond to the communication via the data bus (144), and/or
- to receive the control signals, wherein the communication via the data bus (144) corresponds to the received control signals.

2. Charging socket (100) according to Claim 1, wherein the transmitted and/or received control signals correspond to data in a data frame of the communication via the data bus (144).

3. Charging socket (100) according to Claim 2,
wherein the bus node (140) receives the data frame of the communication via the data bus (144) from the vehicle controller (200) and, in response to the received data frame, controls the signal converter (130) to transmit the control signals, and/or
wherein the signal converter (130) receives the control signals at the signal contacts (120) and the bus node (140), in response to the reception of the control signals, transmits the data frame of the communication via the data bus (144) to the vehicle controller (200).

4. Charging socket (100) according to one of Claims 1 to 3,
wherein a communication protocol of the communication on the data bus (144) is independent of the charging technology, and/or
wherein a signal protocol of the transmitted and/or received control signals at the signal contacts (120) is specific to the charging technology.

5. Charging socket (100) according to one of Claims 1 to 4, wherein the data bus (144), preferably the data frame and/or the communication protocol of the communication on the data bus (144), is designed according to
- a controller area network, CAN, preferably a CAN with a flexible data rate, CAN-FD,
- a local interconnect network, LIN, or
- a local data network, preferably automotive Ethernet.

6. Charging socket (100) according to one of Claims 1 to 5, wherein the data bus (144) comprises only one line pair, optionally according to single-pair Ethernet, automotive Ethernet, CAN or CAN-FD.

7. Charging socket (100) according to one of Claims 1 to 6, further comprising a power supply unit (150) which is connected or can be connected to a vehicle electrical system (250) in an electrically conductive manner and is designed to supply at least the bus node (140) and/or the signal converter (130) with electrical power from a vehicle electrical system (250).

8. Charging socket (100) according to one of Claims 1 to 7, wherein the bus node (140) is also designed to output an identifier of the charging technology of the charging socket (100) to the vehicle controller (200) via the data bus (144).

9. Charging socket (100) according to one of Claims 1 to 8, wherein the vehicle controller (200) of the electric vehicle (800) comprises a charging controller (202) for controlling the charging current when charging the traction energy store (210) and/or a battery management system (204) of the traction energy store (210).

10. Charging socket (100) according to one of Claims 1 to 9, wherein the control signals of the charging-technology-specific signal contacts (120) comprise pilot signals, preferably at least one control pilot signal, CP, for controlling the charging current and/or a proximity pilot signal, PP, or a connection check, CS, for determining the state of the charging plug received in the charging socket (100).

11. Charging socket (100) according to one of Claims 1 to 10, wherein the control signals of the charging-technology-specific signal contacts (120) comprise data bus signals, preferably data bus signals of power-line communication, PLC, and/or data bus signals of a controller area network, CAN.

12. Charging socket (100) according to one of Claims 1 to 11, wherein the charging socket (100) comprises a multiplicity of functions, and the bus node (140) is also designed, in accordance with the communication via the data bus (144), to control the functions in each case and/or query the functions in each case and to communicate the results of the query via the data bus (144).

13. Charging socket (100) according to Claim 12, wherein the charging socket (100) comprises functions within the charging socket (100), preferably a temperature sensor (121) for capturing a temperature of the power contacts (110) or each power contact (110) for alternating current and/or a temperature sensor (122) for capturing a temperature of the power contacts (110) or each power contact (110) for direct current.

14. Charging socket (100) according to Claim 12 or 13, wherein the charging socket (100) comprises functions on the charging socket (100), preferably an actuator-driven lock (123) of a charging flap of the charging socket (100) and/or an actuator-driven lock (124) of the charging plug in the state received in the charging socket (100).

15. Set of charging sockets (100-1, 100-2), comprising:
at least one charging socket (100) according to one of Claims 1 to 14, wherein the charging-technology-specific signal contacts (120) and/or the signal protocol of the control signals at the charging-technology-specific signal contacts (120) correspond(s) to a first charging technology; and
at least one charging socket (100) according to one of Claims 1 to 14, wherein the charging-technology-specific signal contacts (120) and/or the signal protocol of the control signals at the charging-technology-specific signal contacts (120) correspond(s) to a second charging technology which is different from the first charging technology.

16. Vehicle controller (200), which is installed or can be installed in an electric vehicle (800), for controlling the charging of a traction energy store (210) of the electric vehicle (800) with an electrical charging current through a charging socket (100) of the electric vehicle (800), comprising:
a power connection to a vehicle electrical system (250) of the electric vehicle, which is designed to supply electrical power to a signal converter (130) and a bus node (140) of the charging socket (100), as a result of which the signal converter (130) is ready to transmit and/or receive control signals for controlling the charging current at charging-technology-specific signal contacts (120) of the charging socket (100); and
a bus node (240) which comprises a connection to a data bus (144) and is designed to communicate with the bus node (140) of the charging socket (100) via the data bus (144), as a result of which the bus node (140) is ready to control the signal converter (130)
- to transmit the control signals, wherein the transmitted control signals correspond to the communication via the data bus (144), and/or
- to receive the control signals, wherein the communication via the data bus (144) corresponds to the received control signals.

## Revendications

1. Prise de charge (100), montée ou pouvant être montée dans un véhicule électrique (800), destinée à recevoir une fiche de charge en vue de la charge d'un accumulateur (210) d'énergie de traction du véhicule électrique (800) à l'aide d'un courant de charge électrique, comprenant :
des contacts d'alimentation (110), qui sont conçus pour entrer en contact avec des contacts d'alimentation correspondants de la fiche de charge dans l'état inséré dans la prise de charge (100), pour la conduction électrique du courant de charge ;
des contacts de signalisation (120) spécifiques à la technique de charge, qui sont conçus pour entrer en contact avec des contacts de signalisation correspondants de la fiche de charge dans l'état inséré dans la prise de charge (100), pour la commande du courant de charge ;
un convertisseur de signaux (130), qui est conçu pour envoyer et/ou recevoir, au niveau des contacts de signalisation (120) spécifiques à la technique de charge de la prise de charge (100), des signaux de commande pour la commande du courant de charge ;
la prise de charge (100) étant **caractérisée par** un nœud de bus (140) qui comprend une connexion (142) avec un bus de données (144) et qui est conçu pour communiquer avec une commande de véhicule (200) du véhicule électrique (800) par l'intermédiaire du bus de données (144) et pour commander le convertisseur de signaux (130)
- pour l'envoi des signaux de commande, les signaux de commande envoyés correspondant à la communication par l'intermédiaire du bus de données (144) et/ou
- pour la réception des signaux de commande, la communication par l'intermédiaire du bus de données (144) correspondant aux signaux de commande reçus.

2. Prise de charge (100) selon la revendication 1, les signaux de commande envoyés et/ou reçus correspondant à des données dans une trame de données de la communication par l'intermédiaire du bus de données (144).

3. Prise de charge (100) selon la revendication 2,
le nœud de bus (140) recevant la trame de données de la communication par l'intermédiaire du bus de données (144) à partir de la commande de véhicule (200) et commandant, en réaction à la trame de données reçue, le convertisseur de signaux (130) pour l'envoi des signaux de commande et/ou
le convertisseur de signaux (130) recevant les signaux de commande au niveau des contacts de signalisation (120) et le nœud de bus (140) envoyant, en réaction à la réception des signaux de commande, la trame de données de la communication par l'intermédiaire du bus de données (144) à la commande de véhicule (200).

4. Prise de charge (100) selon l'une des revendications 1 à 3,
un protocole de communication de la communication sur le bus de données (144) étant indépendant de la technique de charge et/ou
un protocole de signalisation des signaux de commande envoyés et/ou reçus au niveau des contacts de signalisation (120) étant spécifique à la technique de charge.

5. Prise de charge (100) selon l'une des revendications 1 à 4, le bus de données (144), de préférence la trame de données et/ou le protocole de communication de la communication sur le bus de données (144), étant conçu(e) selon
- un Controller Area Network, CAN, de préférence un CAN présentant un débit de données flexible, CAN-FD,
- un Local Interconnect Network, LIN, ou
- un réseau de données local, de préférence un Éthernet automobile.

6. Prise de charge (100) selon l'une des revendications 1 à 5, le bus de données (144) ne comprenant qu'une paire de conduction, éventuellement selon un Éthernet à paire unique, un Éthernet automobile, un CAN ou un CAN-FD.

7. Prise de charge (100) selon l'une des revendications 1 à 6, comprenant en outre un bloc d'alimentation (150), connecté ou pouvant être connecté de manière électriquement conductrice à un réseau de bord (250), qui est conçu pour alimenter au moins le nœud de bus (140) et/ou le convertisseur de signaux (130) en énergie électrique provenant d'un réseau de bord (250).

8. Prise de charge (100) selon l'une des revendications 1 à 7, le nœud de bus (140) étant en outre conçu pour émettre, par l'intermédiaire du bus de données (144), un identifiant de la technique de charge de la prise de charge (100) vers la commande de véhicule (200).

9. Prise de charge (100) selon l'une des revendications 1 à 8, la commande de véhicule (200) du véhicule électrique (800) comprenant une commande de charge (202) destinée à commander le courant de charge lors de la charge de l'accumulateur (210) d'énergie de traction et/ou un système de gestion (204) de batterie de l'accumulateur (210) d'énergie de traction.

10. Prise de charge (100) selon l'une des revendications 1 à 9, les signaux de commande des contacts de signalisation (120) spécifiques à la technique de charge comprenant des signaux pilote, de préférence au moins un signal pilote de commande, CP, destiné(s) à la commande du courant de charge et/ou un signal pilote de proximité, PP, ou un test de connexion, CP, destiné à constater l'état inséré dans la prise de charge (100) de la fiche de charge.

11. Prise de charge (100) selon l'une des revendications 1 à 10, les signaux de commande des contacts de signalisation (120) spécifiques à la technique de charge comprenant des signaux de bus de données, de préférence des signaux de bus de données d'une Power-Line Communication, PLC, et/ou des signaux de bus de données d'un Controller Area Networks, CAN.

12. Prise de charge (100) selon l'une des revendications 1 à 11, la prise de charge (100) comprenant une multitude de fonctions et le nœud de bus (140) étant en outre conçu pour, conformément à la communication par l'intermédiaire du bus de données (144), commander à chaque fois les fonctions et/ou consulter à chaque fois les fonctions et communiquer les résultats de la consultation par l'intermédiaire du bus de données (144).

13. Prise de charge (100) selon la revendication 12, la prise de charge (100) comprenant des fonctions dans la prise de charge (100), de préférence un capteur de température (121) destiné à détecter une température des contacts d'alimentation (110) ou de chaque contact d'alimentation (110) pour le courant alternatif et/ou un capteur de température (122) destiné à détecter une température des contacts d'alimentation (110) ou de chaque contact d'alimentation (110) pour le courant continu.

14. Prise de charge (100) selon la revendication 12 ou 13, la prise de charge (100) comprenant des fonctions au niveau de la prise de charge (100), de préférence un verrouillage (123), piloté par un actionneur, d'un clapet de charge de la prise de charge (100) et/ou un verrouillage (124), piloté par un actionneur, de la fiche de charge dans l'état inséré dans la prise de charge (100).

15. Ensemble de prises de charge (100-1, 100-2), comprenant :
au moins une prise de charge (100) selon l'une des revendications 1 à 14, les contacts de signalisation (120) spécifiques à la technique de charge et/ou le protocole de signalisation des signaux de commande au niveau des contacts du signal (120) spécifiques à la technique de charge correspondant à une première technique de charge ; et
au moins une prise de charge (100) selon l'une des revendications 1 à 14, les contacts du signal (120) spécifiques à la technique de charge et/ou le protocole de signalisation des signaux de commande au niveau des contacts du signal (120) spécifiques à la technique de charge correspondant à une deuxième technique de charge, qui est différente de la première technique de charge.

16. Commande de véhicule (200), qui est montée ou peut être montée dans un véhicule électrique (800), pour la commande de la charge d'un accumulateur (210) d'énergie de traction du véhicule électrique (800) à l'aide d'un courant de charge électrique à travers une prise de charge (100) du véhicule électrique (800), comprenant :
une connexion électrique à un réseau de bord (250) du véhicule électrique, qui est conçu pour alimenter un convertisseur de signaux (130) et un nœud de bus (140) de la prise de charge (100) en énergie électrique, suite à quoi le convertisseur de signaux (130) est prêt à envoyer et/ou à recevoir, au niveau des contacts de signalisation (120) spécifiques à la technique de charge de la prise de charge (100), des signaux de commande destinés à commander le courant de charge ; et
un nœud de bus (240) qui comprend une connexion à un bus de données (144) et qui est conçu pour communiquer avec le nœud de bus (140 de la prise de charge (100) par l'intermédiaire du bus de données (144), suite à quoi le nœud de bus (140) est prêt à commander le convertisseur de signaux (130)
- pour l'envoi des signaux de commande, les signaux de commande envoyés correspondant à la communication par l'intermédiaire du bus de données (144) et/ou
- pour la réception des signaux de commande, la communication par l'intermédiaire du bus de données (144) correspondant aux signaux de commande reçus.
